# FASCICULE DE BREVET EUROPEEN

(11) **EP 2 982 623 B1**
(45) Date de publication et mention de la délivrance du brevet: **03.07.2019**
(21) Numéro de dépôt: 15306076.9
(22) Date de dépôt: 02.07.2015
(51) Int. Cl.: B65G 49/06

(54) **PROCÉDÉ ET INSTALLATION POUR LA POSE DE PASTILLES FORMANT ENTRETOISE SUR UNE SURFACE DE RÉCEPTION D'UN PANNEAU**
VERFAHREN UND ANLAGE ZUR VERLEGUNG VON UNTERLAGSSCHEIBEN, DIE EINE VERSTREBUNG AUF EINER OBERFLÄCHE ZUR AUFNAHME EINES PANEELS BILDEN
METHOD AND DEVICE FOR LAYING PADS FORMING A SPACER ON A RECEIVING SURFACE OF A PANEL

(30) Priorité: 04.07.2014 FR 1456451
(43) Date de publication de la demande: 10.02.2016
(73) Titulaire: S.N. Techniques et Automatismes de Manutention - Tecauma, 85140 Les Essarts (FR)
(72) Inventeur: BREILLAC, Philippe, 85170 DOMPIERRE SUR YON (FR)
(74) Mandataire: Jacobacci Coralis Harle

(56) Documents cités:
- EP-A2- 0 997 408
- DE-A1- 3 831 392
- ES-A1- 2 298 009
- FR-A1- 2 807 394
- US-A- 4 595 447
- US-A1- 2013 117 982

## Description

### DOMAINE TECHNIQUE AUQUEL SE RAPPORTE L'INVENTION

La présente invention concerne le domaine du stockage de panneaux, en particulier d'un panneau en verre ; elle concerne en particulier un procédé et une installation pour la pose de pastilles formant entretoise sur une surface de réception d'un tel panneau en vue de son empilement.

### ARRIERE-PLAN TECHNOLOGIQUE

Certains types de panneaux sont très fragiles, voire dangereux en cas de casse.

C'est par exemple le cas des panneaux de verre, qu'ils soient simple, double ou triple, destinés au secteur de la menuiserie industrielle.

En fin de ligne de production, un conditionnement soigneux de ces panneaux est ainsi nécessaire.

Pour cela, ces panneaux sont classiquement stockés d'une manière empilée les uns contre les autres, tout en maintenant un espace entre eux de manière à éviter leur contact direct et les préserver notamment des détériorations mécaniques.

A cette fin, des pastilles adhésives formant entretoise sont habituellement réparties sur une surface de réception de chaque panneau juste avant l'opération d'empilage, de sorte à permettre une superposition via lesdites pastilles et à éviter ainsi tout contact direct entre lesdits panneaux.

Ces pastilles à poser sont habituellement fournies sous la forme de bandes enroulées sur bobines, avec un pré-découpage entre chacune desdites pastilles.

Actuellement la dépose s'effectue manuellement ou mécaniquement, au moyen d'une tête de pose qui déroule la bobine, sépare les pastilles et vient exercer une pression mécanique sur chaque pastille à poser, de sorte à l'appliquer contre la surface de réception du panneau.

Des installations pour la mise en oeuvre de telles techniques de pose sont par exemple décrites dans les documents EP-0 997 408 ou US-201 3/1 1 7982.

EP-0 997 408 divulgue un procédé selon le préambule de la revendication 1 et une installation selon le préambule de la revendication 4.

Cette technique nécessite alors d'appuyer sur chaque pastille lors de sa pose, pour sa solidarisation avec le panneau et son détachement des autres pastilles.

Toutefois, cette approche n'est pas totalement satisfaisante au regard des techniques mises en oeuvre pour le convoyage de ces panneaux.

En effet, en particulier pour les panneaux de verre, les lignes de fabrication convoient ces panneaux à la « quasi verticale », sur des convoyeurs avec dosseret à coussin d'air, pour éviter tout contact mécanique avec ce dosseret.

De tels convoyeurs avec dosseret à coussin d'air permettent à la fois de ne pas salir le panneau convoyé, et de ne pas risquer sa casse par chocs mécaniques.

Mais, l'appui sur chaque pastille à poser est susceptible de briser le coussin d'air protecteur, faisant entrer en contact le panneau de verre avec le dosseret, avec les risques de salissures et de casse qui en découlent.

Cette technique actuelle de pose génère également les problèmes suivants :
- il est nécessaire d'avoir autant de têtes de pose qu'il y a de rangées de pastilles sur le panneau ;
- c'est l'avance du panneau sur le dosseret qui permet le bon déroulement des bandes de pastilles et le collage des pastilles suivant une rangée ;
- la répartition des pastilles s'effectue sur la surface totale du panneau en cours de traitement, sans pouvoir aisément assurer une répartition appropriée tenant compte du panneau suivant qui viendra en contact de ce panneau, générant souvent une consommation excessive de pastilles.

Le document FR-2 807 394 divulgue un procédé pour la pose de petites plaques en mousse pour entourer et protéger des afficheurs électroniques, lequel procédé de pose comprend une étape de transfert au cours de laquelle chacune desdites plaques est transférée, par le biais de moyens de transfert, depuis des moyens pour la distribution desdites plaques jusqu'à la surface de réception, lesdits moyens de transfert étant un robot de préhension.

Dans ce contexte, il existe un besoin de disposer d'une technique de pose de pastilles susceptible de résoudre ces différents problèmes, notamment qui permet une dépose des pastilles sans nécessiter un contre-appui à l'arrière du panneau.

### OBJET DE L'INVENTION

La présente invention concerne un procédé pour la pose de pastilles formant entretoise sur une surface de réception d'un panneau, en particulier d'un panneau de verre, en vue d'un empilement dudit panneau, ce procédé comprenant une étape de transfert au cours de laquelle chacune desdites pastilles est transférée, par le biais de moyens de transfert, depuis des moyens pour la distribution desdites pastilles jusqu'à ladite surface de réception dudit panneau ;
et conformément à l'invention, lesdits moyens de transfert comprennent au moins une ventouse associée à des moyens pour générer un flux d'air au sein de ladite ventouse. De plus, l'étape de transfert comprend un pilotage desdits moyens de transfert entre deux configurations :
a/ une configuration de préhension, dans laquelle :
   a1/ ladite ventouse libre, dépourvue de pastille, est agencée en regard d'une pastille située au niveau desdits moyens de distribution, puis
   a2/ un flux d'air en aspiration est généré dans ladite ventouse, pour assurer la préhension de ladite pastille, et
b/ une configuration de dépose, dans laquelle :
   b1/ ladite ventouse occupée, portant une pastille, est agencée en regard de la surface de réception du panneau, de sorte qu'une distance non nulle est ménagée entre, d'une part, la surface de réception du panneau et, d'autre part, la surface en regard de la pastille portée par la ventouse, puis
   b2/ un flux d'air en soufflage est généré dans ladite ventouse occupée, pour exercer une poussée sur la pastille associée en direction de ladite surface de réception du panneau.

Un tel procédé permet une dépose de chaque pastille, cela sans exercer d'appui mécanique direct sur cette pastille lorsqu'elle est au contact du panneau (ou pratiquement sans appui mécanique direct).

Cette solution permet ainsi d'éviter tout effort mécanique qui serait susceptible de dégrader directement, ou indirectement, l'état du panneau.

Selon des caractéristiques avantageuses de réalisation :
- la distance ménagée entre, d'une part, la surface de réception du panneau et, d'autre part, la surface en regard de la pastille portée par la ventouse, est inférieure ou égale à 1 mm.
- les moyens de transfert comprennent une pluralité de ventouses qui sont associées à des moyens pour générer des flux d'air distincts au sein desdites ventouses ; dans ce cas, dans la position de préhension, une ou plusieurs ventouses libres prélèvent chacune l'une desdites pastilles, et dans la position de dépose, lesdites ventouses occupées exercent successivement une poussée sur lesdites pastilles respectivement associées, cela en direction de ladite surface de réception du panneau.

La présente invention concerne également une installation pour la pose de pastilles formant entretoise sur une surface de réception d'un panneau, en particulier un panneau de verre, en vue d'un empilement de ce panneau.

Cette installation de pose comprend :
- des moyens pour le support d'au moins l'un desdits panneaux, avec ladite surface de réception accessible,
- des moyens pour la distribution desdites pastilles,
- des moyens pour le transfert desdites pastilles depuis lesdits moyens de distribution jusqu'à ladite surface de réception du panneau, et
- des moyens pour la commande de ces moyens de transfert ;
   et conformément à l'invention, les moyens de transfert comprennent au moins une ventouse qui est, d'une part, associée à des moyens pour générer un flux d'air au sein de ladite ventouse et, d'autre part, portée par des moyens de manoeuvre dans l'espace, lesquels moyens de commande comportent des moyens pour piloter lesdits moyens de transfert entre deux configurations :
   a/ une configuration de préhension, dans laquelle :
      a1/ les moyens de manoeuvre pilotent ladite ventouse libre, dépourvue de pastille, en regard d'une pastille située au niveau desdits moyens de distribution, et
      a2/ les moyens pour générer un flux d'air sont pilotés pour générer un flux d'air en aspiration dans ladite ventouse, pour assurer la préhension de ladite pastille, et
   b/ une configuration de dépose, dans laquelle :
      b1/ les moyens de manoeuvre pilotent ladite ventouse occupée, portant une pastille prélevée, en regard de la surface de réception du panneau, et
      b2/ les moyens pour générer un flux d'air sont pilotés pour générer un flux d'air en soufflage dans ladite ventouse occupée, pour exercer une poussée sur ladite pastille en direction de ladite surface de réception du panneau.

Les moyens de commande comprennent un programme d'ordinateur comprenant des moyens de code de programme, enregistrés sur un support lisible par un ordinateur, pour l'exécution des étapes du procédé selon l'invention lorsque ledit programme d'ordinateur est exécuté par lesdits moyens de commande.

Selon des caractéristiques de réalisation avantageuses :
- la ou les ventouses consistent en des ventouses du type à soufflet ;
- les moyens de transfert comprennent plusieurs ventouses, et les moyens pour générer les flux d'air comprennent des moyens pour générer des flux d'air indépendants au sein de chacune des ventouses ;
- les ventouses sont réparties sur au moins deux lignes, s'étendant parallèlement et à distance l'une de l'autre, et les moyens de distribution comprennent des moyens pour la présentation des pastilles selon des lignes complémentaires ;
- les pastilles sont initialement alignées sur une bande support, solidarisées longitudinalement les unes avec autres par une ligne d'amorce de rupture, et les moyens de distribution comportent (i) des moyens pour séparer lesdites pastilles par rapport à ladite bande support et (ii) des moyens pour rompre lesdites lignes d'amorce de rupture ;
- les moyens de manoeuvre consistent en un robot à bras polyarticulé ;
- les moyens support de panneaux comprennent a/ un dosseret muni de moyens pour générer un coussin d'air, apte à porter une surface dudit panneau rapporté, opposée à ladite surface de réception, et b/ des moyens pour le convoyage desdits panneaux le long dudit dosseret.

### DESCRIPTION DETAILLEE D'UN EXEMPLE DE RÉALISATION

La présente invention sera encore illustrée, sans être aucunement limitée, par la description suivante d'un mode de réalisation particulier en relation avec les figures annexées dans lesquelles :
- la figure 1 est une vue schématique générale et en perspective de l'installation selon l'invention, pour la pose de pastilles sur un panneau, avec une vue schématique partielle et en coupe d'une partie dudit panneau portant l'une desdites pastilles ;
- la figure 2 est une vue de côté de l'installation de pose selon la figure 1 ;
- la figure 3 est une vue partielle et de face de l'installation de pose selon les figures 1 et 2 ;
- la figure 4 représente, de manière isolée et en perspective, une forme de réalisation particulière de la partie des moyens de transfert équipée de ventouses, et équipant l'installation de pose selon les figures 1 à 3 ;
- la figure 5 représente schématiquement, vue de côté, la configuration pour la dépose d'une pastille préalablement prélevée par l'une des ventouses ;
- la figure 6 illustre une forme de réalisation possible de pastilles destinées à être prélevées par les moyens de transfert ;
- la figure 7 représente, vue de dessus, une forme de réalisation possible des moyens de distribution comprenant deux lignes d'alimentation parallèles ;
- la figure 8 représente schématiquement, et selon un plan de coupe VIII-VIII de la figure 7, l'une des deux lignes d'alimentation en pastilles ;
- la figure 9 est une vue partielle et agrandie de la ligne d'alimentation selon la figure 8.

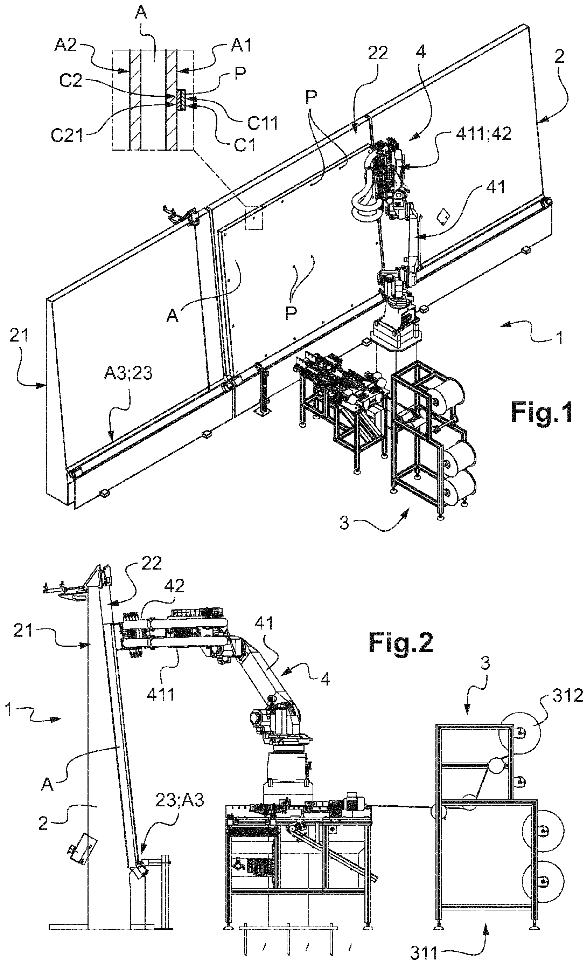

L'installation 1 selon l'invention, représentée sur les figures 1 à 9, est adaptée à la pose de pastilles P formant entretoise sur une surface de réception A1 d'un panneau A.

L'installation de pose 1 selon l'invention est destinée à être intégrée dans une ligne de fabrication de panneaux, juste en amont de moyens de palettisation.

Ces moyens de palettisation sont habituellement adaptés à prendre chacun des panneaux sur la ligne de fabrication et à les empiler verticalement ou quasi-verticalement, par exemple sur des chariots (séparés les uns des autres par les pastilles-entretoises P).

Le panneau A consiste avantageusement en un panneau de verre, dit encore « vitrage ».

Un tel panneau de verre A peut consister, par exemple, en un panneau simple, double ou triple vitrage.

Ce panneau A comprend en particulier :
- la surface de réception A1, sur laquelle sont rapportées les pastilles P,
- une surface arrière A2, opposée à la surface de réception A1, et
- un chant inférieur A3 sur lequel repose ce panneau A relevé verticalement ou approximativement verticalement, notamment lors de son convoyage.

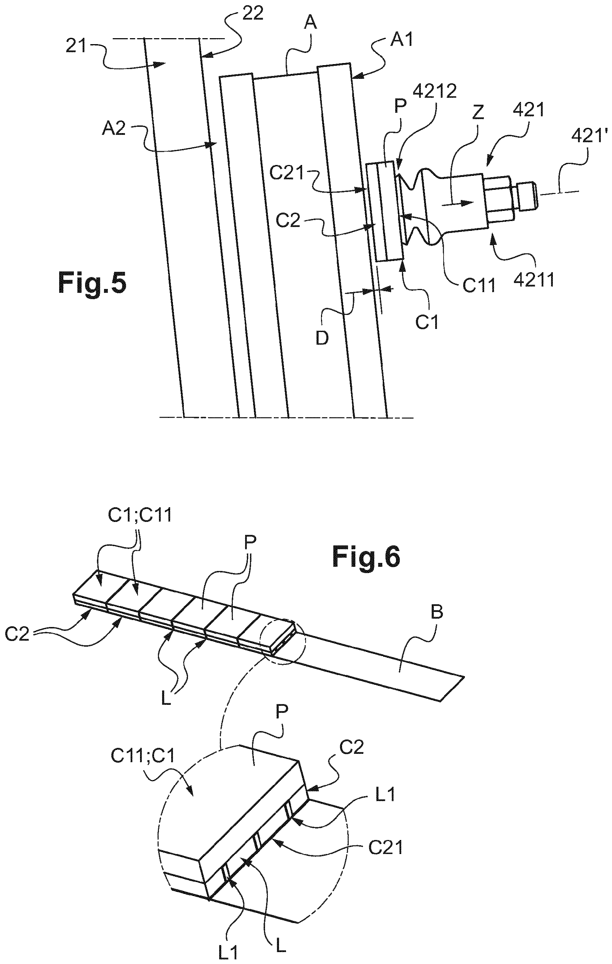

Chaque pastille P, classique en soi et visible en particulier figures 1 et 6, est avantageusement constituée de deux couches superposées :
- une première couche C1 d'un matériau isolant, par exemple du liège, apte à isoler des vibrations ou des chocs, comportant une surface supérieure C11 apte à ne pas laisser de traces sur un panneau superposé, et
- une seconde couche C2 comportant une surface adhésive C21, libre, qui est apte à adhérer au panneau A tout en permettant sa séparation sans laisser de traces significatives sur ce dernier.

Tel que représenté sur les figures 1 à 3, l'installation de pose 1 selon l'invention comprend :
- des moyens 2 pour le support du panneau A avec sa surface de réception A1 accessible,
- des moyens 3 pour la distribution des pastilles P,
- des moyens 4 pour le transfert des pastilles P depuis les moyens de distribution 3 jusqu'à la surface de réception A1 du panneau A, et
- des moyens de commande (non représentés), pour le pilotage notamment desdits moyens de transfert 4.

Les moyens supports 2 assurent un convoyage des panneaux A à la verticale ou à la quasi-verticale.

Par « quasi-verticale » on entend une légère inclinaison des panneaux A vers l'arrière, de bas vers le haut, par exemple selon un angle compris entre 5° et 15° par rapport à la verticale.

Les moyens supports 2, représentés sur les figures 1 à 3, comprennent pour cela un dosseret 21 muni :
- de moyens 22 pour générer un coussin d'air dans un plan vertical ou quasiment vertical, ledit coussin d'air étant apte à supporter sans contact la surface arrière A2 du panneau A en présence, et
- de moyens 23, horizontaux ou quasi-horizontaux, pour le convoyage des panneaux sur leur chant inférieur A3, le long du dosseret 21.

Les moyens de coussin d'air 22 consistent par exemple en un ensemble de buses ménagées dans un plateau et associées à un générateur de type compresseur ou turbine pour générer une pluralité de jets d'air en soufflage.

De tels moyens de coussin d'air 22 évitent ainsi tout contact mécanique de la surface arrière A2 des panneaux A avec le dosseret 21.

Les moyens de convoyage sur chant 23 consistent quant à eux en deux ensembles de galets ou de bandes convoyeuses, motorisé(e)s, qui sont directement sous-jacent(e)s et s'étendant le long des moyens de coussin d'air 22.

Ces deux ensembles de galets ou de bandes convoyeuses sont agencés en Vé de sorte à convoyer le chant inférieur A3 du panneau A, sur ses arrêtes longitudinales communes aux surfaces A1 et A2, en évitant au moins le contact avec la partie centrale du panneau A.

De leur côté, les moyens de transfert 4 comprennent des moyens de manoeuvre 41 dont la tête d'extrémité 411 porte un préhenseur 42 à pastilles P.

Ces moyens de manoeuvre 41 consistent en des moyens de manoeuvre dans l'espace, avantageusement dans les trois dimensions, par exemple un bras robot poly-articulé.

Le préhenseur 42, porté par ce bras robot 41, est apte à prélever des pastilles P au sein des moyens de distribution 3, pour ensuite les déposer successivement sur la surface de réception A1 du panneau A.

Selon l'invention, ce préhenseur 42 est apte à déposer chaque pastille P, cela sans exercer d'appui mécanique direct (ou pratiquement aucun appui) sur cette pastille P au moment où elle vient au contact du panneau A.

Par « aucun appui mécanique », on entend en particulier l'absence d'une pièce ou partie du préhenseur 42 qui serait au contact de la pastille P pour exercer une force de poussée sur cette dernière lors de son contact avec le panneau A.

Pour cela, le préhenseur 42 utilise des phénomènes de flux d'air, et notamment un flux d'air en soufflage apte à projeter la pastille P sur le panneau A.

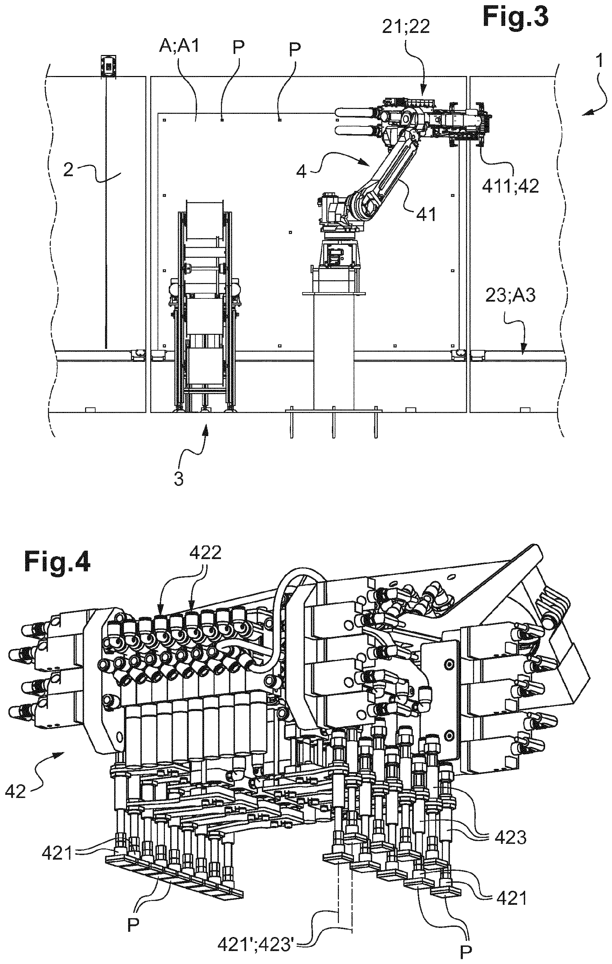

En l'espèce, tel que représenté sur la figure 4, ce préhenseur 42 comprend une pluralité de ventouses 421 qui sont chacune associées à :
- des moyens 422 pour générer un flux d'air au sein de la ventouse 421 associée, indépendamment des autres ventouses 421 du préhenseur 42, et
- des moyens 423 pour un déplacement en translation de la ventouse 421 associée, indépendamment des autres ventouses 421 du préhenseur 42.

Les ventouses 421 sont ici juxtaposées et réparties sur deux lignes, s'étendant parallèlement et à distance l'une de l'autre, pour un prélèvement simultané de pastilles P sur deux lignes d'alimentation des moyens de distribution 3.

De manière alternative, ce préhenseur 42 peut comporter une ou plusieurs ventouses 421 qui peuvent être agencées selon toute autre configuration à façon, par exemple juxtaposées et réparties sur une unique ligne pour un prélèvement simultané de pastilles P sur une unique ligne d'alimentation des moyens de distribution 3.

Chaque ligne de ventouses 421 comprend avantageusement entre cinq et dix ventouses 421 juxtaposées.

Ces ventouses 421, dont l'une d'elles est représentée de manière isolée sur la figure 5, consistent avantageusement en des ventouses à soufflet(s), en l'espèce à 1,5 soufflet.

De manière alternative, les ventouses pourraient également être choisies parmi des ventouses plates ou à 2,5 soufflets.

Chaque ventouse 421 comporte deux extrémités :
- une extrémité amont 4211, raccordée aux moyens pour générer le flux d'air 422, et
- une extrémité aval 4212 débouchante, destinée à coopérer avec une pastille P.

Les moyens pour générer le flux d'air 422 sont aptes à générer un flux d'air dans deux sens différents au sein de la ventouse 421 associée :
- un flux d'air en aspiration Z dans la ventouse 421 associée (c'est-à-dire depuis son extrémité aval 4212 et vers son extrémité amont 4211), pour assurer la préhension d'une pastille P par le vide, et
- un flux d'air en soufflage dans la ventouse 421 associée (c'est-à-dire depuis son extrémité amont 4211 et vers son extrémité aval 4212), apte à exercer une poussée sur la pastille P en présence, pour la projeter sur le panneau A.

Par exemple, ces moyens pour générer le flux d'air 422 consistent en une pluralité de dispositifs Venturi avec soufflage intégré, raccordés chacun à l'une des ventouses 421.

Ces dispositifs Venturi intègrent une réserve d'air qui se libère automatiquement en fin d'aspiration pour générer ainsi le soufflage.

Le réglage des débits se fait par ajustement de la pression d'entrée.

Les moyens de déplacement 423 sont utiles pour déployer une ventouse 421 lors du prélèvement et/ou de la dépose d'une pastille P associée.

Ces moyens de déplacement 423 sont agencés pour permettre un déplacement de chaque ventouses 421 selon un axe de translation 423' qui s'étend coaxialement à l'axe longitudinal 421' de la ventouse 421 associée (figure 4).

Les axes longitudinaux de translation 423' des différentes ventouses 421 s'étendent ici, sans être limitatif, parallèlement les uns par rapport aux autres.

Ces moyens de déplacement 423 permettent ainsi un déplacement de la ventouse 421 associée entre deux positions de fin de course, à savoir :
- une position escamotée, inactive, dans laquelle la ventouse 421 est rapprochée de la tête d'extrémité 411, et
- une position déployée, active, dans laquelle la ventouse 421 est éloignée de la tête d'extrémité 411.

Ces moyens de déplacement 423 consistent par exemple en un actionneur linéaire, avantageusement un vérin pneumatique.

La distance entre les positions escamotée et déployée est avantageusement comprise entre 1 et 5 cm.

Les moyens de commande (non représentés) comportent des moyens pour piloter les moyens de transfert 4, notamment le bras robot poly-articulé 41, les moyens 422 pour générer le flux d'air, et les moyens 423 pour le déplacement en translation des ventouses 421.

Pour cela, ces moyens de commande comprennent avantageusement un programme d'ordinateur comprenant des moyens de code de programme, enregistrés sur un support lisible par un ordinateur (par exemple mémoire vive, mémoire morte, disque dur, etc.).

Les moyens de code de programme assurent l'exécution des étapes d'un procédé de pose des pastilles, lorsque ledit programme d'ordinateur est exécuté par les moyens de commande.

Les moyens de commande permettent également le calcul exact du nombre de pastilles à déposer sur le panneau A, et la détermination de leur agencement sur sa surface de réception A1, en fonction notamment de la surface commune d'appui du panneau destiné à le recouvrir. Cette approche est particulièrement intéressante pour réduire le nombre de pastilles utilisées, et assurer une superposition optimale de deux panneaux.

En pratique, le procédé de pose selon l'invention comprend une étape de transfert au cours de laquelle chacune des pastilles P est transférée, par le biais des moyens de transfert 4, depuis les moyens de distribution 3 jusqu'à la surface de réception A1 du panneau A à équiper.

Cette étape de transfert comprend un pilotage des moyens de transfert 4 entre deux configurations : une configuration de préhension et une configuration de dépose.

La configuration de préhension (non représentée) est mise en oeuvre de sorte qu'une ou plusieurs des ventouses 421 libres (sans pastilles P) puisse(nt) prélever chacune l'une des pastilles P au sein des moyens de distribution 3.

Pour cela, lors de cette configuration de préhension :
a1/ le préhenseur 42 est manipulé de sorte qu'une ou plusieurs ventouses libres 421, dépourvues de pastilles P, soient agencées en regard de (voire en appui sur) la surface supérieure C11 d'une pastille P située au niveau des moyens de distribution 3, puis
a2/ les moyens pour générer le flux d'air 422 sont pilotés pour produire un flux d'air en aspiration dans les ventouses 421 précitées, assurant chacune la préhension de la pastille P en regard (voire la préhension simultanée de plusieurs pastilles P par les ventouses 421 respectives).

Les moyens 422 pour générer un flux d'air sont maintenus actifs au moins pendant un laps de temps adapté à générer un vide d'air dans la ventouse 421 d'intérêt.

De préférence, lors de ce prélèvement, le positionnement de chaque ventouse 421 est également ajusté par le biais des moyens de déplacement 423, depuis sa position escamotée jusqu'à sa position déployée.

Pour cela, ces moyens de déplacement 423 déploient la ou les ventouses libres 421 de sorte à les mettre en appui sur la surface supérieure C11 de la pastille P située en regard.

La configuration de dépose est quant à elle destinée à permettre la dépose successive des pastilles P sur la surface de réception A1 du panneau A, sans appliquer d'efforts susceptibles de dégrader directement, ou indirectement, le panneau A.

A cet effet, lors de la configuration de dépose (figures 1 à 3 et 5) :
b1/ le préhenseur 42 est manipulé de sorte que la ou l'une des ventouses 421 occupées (portant une pastille P) soit agencée en regard et à proximité d'un point cible de la surface de réception A1 du panneau A, puis
b2/ les moyens pour générer le flux d'air 422 sont pilotés pour produire un flux d'air en soufflage dans la ventouse 421 correspondante, pour exercer une poussée sur ladite pastille P associée en direction de la surface de réception A1 du panneau A.

Selon l'invention et telle que représentée sur la figure 5, la configuration de dépose est ajustée de sorte à maintenir une distance D entre, d'une part, la surface de réception A1 du panneau A, et d'autre part, la surface adhésive C21 de la pastille P portée par la ventouse 421.

Cette distance D constitue une sécurité pour éviter tout appui mécanique exercé par le biais de la ventouse 421, susceptible de rompre le coussin d'air support. L'effet de projection par le flux d'air est efficace au sein de cette distance D.

En pratique, cette distance D est avantageusement comprise entre 0 et 1 mm, mais non nulle.

Les précisions de l'installation de pose 1, notamment du bras robot poly-articulé 41, permettent avantageusement de se situer, par défaut, à la distance D comprise entre 0 et 1 mm, non nulle. Les dispersions cumulées peuvent modifier cette distance D.

Dans cette configuration de dépose, le flux d'air en soufflage provoque le déplacement de la pastille P associée, selon un axe de translation coaxial à l'axe longitudinal 421' de la ventouse 421.

La pastille P se déplace ainsi selon une trajectoire rectiligne, parallèlement à elle-même, jusqu'à ce que sa surface adhésive C21 entre en contact avec le panneau A.

De préférence, les moyens pour générer le flux d'air 422 sont maintenus actifs pendant un laps de temps suffisant pour appliquer le flux d'air en soufflage également sur la pastille P en appui sur le panneau A, de sorte à exercer encore une légère pression sur cette pastille P en position et à optimiser la coopération de la surface adhésive C21 de la pastille P sur ce panneau A.

De préférence, lors de cette dépose, le positionnement de chaque ventouse 421 est ajusté également par le biais des moyens de déplacement 423, cela depuis la position escamotée vers la position déployée.

Cette position déployée permet un écartement de la pastille P associée par rapport aux autres pastilles P selon l'axe longitudinal 421' (maintenues par les autres ventouses) évitant que d'autres pastilles ne viennent toucher le panneau A ou n'interfèrent avec la projection.

Avantageusement, les étapes b1/ et b2/ de la configuration de dépose sont reproduites plusieurs fois, sans retour intercalaire en configuration de préhension, pour la dépose successive d'une pluralité de pastilles P en différents points cibles de la surface de réception A1 du panneau A.

Le panneau A pourvu des pastilles P en nombre et en positionnement déterminés, peut enfin être pris en charge par les moyens de palettisation, de sorte à le déposer sur une structure de stockage (par exemple un chariot).

La surface de réception A1, munie de pastilles P, est destinée à recevoir la surface arrière d'un panneau A (éventuellement également pourvu de pastilles sur sa surface de réception opposée), pour leur empilement via lesdites pastilles P.

La solution selon l'invention a l'intérêt de permettre une dépose des pastilles P suivant des coordonnées à façon, fournies par le fabricant du panneau A, sans être obligé de réaliser cette dépose suivant des rangées et/ou des colonnes figées.

Par ailleurs, tel que représenté sur la figure 6, et de manière schématique, les pastilles P peuvent se présenter initialement sous la forme d'un ruban et être alignées sur une bande support B consistant par exemple en un film plastique souple.

Les pastilles P sont alors agencées de sorte que leur couche adhésive C2 coopère avec cette bande support B.

Ces pastilles P sont en plus solidarisées longitudinalement, les unes avec les autres, par le biais de lignes d'amorce de rupture L ménagées dans la couche adhésive C2.

En l'espèce, chaque ligne d'amorce de rupture L est constituée de plusieurs points monoblocs de jonction L1 qui sont visibles sur la vue de détails de la figure 6, après rupture.

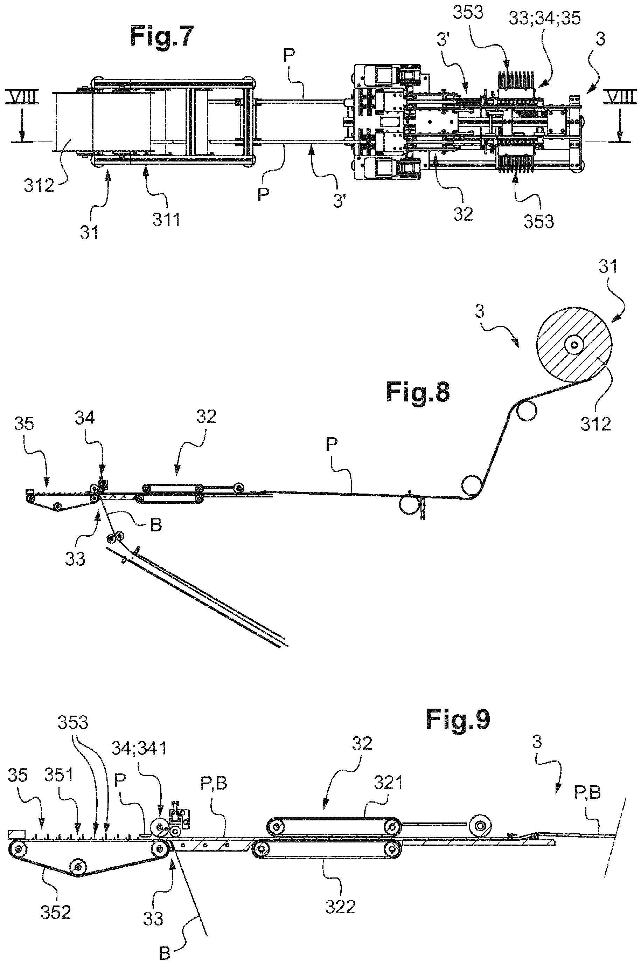

Les moyens de distribution 3, représentés sur les figures 7 à 9, sont adaptés pour la fourniture de pastilles P se présentant sous une telle forme de ruban.

En l'espèce, ces moyens de distribution 3 comprennent des moyens pour la présentation des pastilles P selon deux lignes de présentation 3' parallèles et complémentaires de l'agencement des ventouses 421 du préhenseur 42.

Par « complémentaires », on entend un écartement entre les deux lignes de présentation 3' qui est identique à l'écartement entre les deux lignes de ventouses 421 portées par le préhenseur 42.

Les deux lignes de présentation 3' sont identiques l'une par rapport à l'autre.

De manière alternative, les moyens de distribution 3 comprennent des moyens pour la présentation des pastilles P selon tout autre agencement, par exemple une unique ligne de présentation 3' parallèle et complémentaire de l'agencement des ventouses 421 du préhenseur 42.

L'une de ces deux lignes de présentation 3', décrite plus en détails ci-dessous en relation avec les figures 8 et 9, comporte de l'amont vers l'aval :
- des moyens 31 pour le stockage des pastilles P en bobines, par exemple de type dévidoir,
- des moyens 32 pour l'entraînement en déroulement des pastilles P en bobines,
- des moyens 33 pour la séparation des pastilles P par rapport à la bande support B,
- des moyens 34 pour la séparation des pastilles P entre elles, par dégradation de leurs lignes d'amorce de rupture L respectives, et
- des moyens 35 pour la présentation des pastilles P séparées à destination des ventouses 421 du préhenseur 42.

Les moyens de stockage 31 consistent par exemple en un châssis 311 portant des dévidoirs 312 sur lesquels sont enroulées les pastilles P en bobines.

Les moyens d'entraînement 32 comprennent quant à eux ici deux bandes convoyeuses 321, 322 dont les brins agencés parallèlement et en regard l'un de l'autre pincent entre eux la bande de pastilles P et assurent son déroulement vers l'aval.

Les moyens 33 pour la séparation de la bande support B comprennent de leur côté une fente pour le passage de la bande support B associée à des moyens pour la traction sur cette bande support B, à savoir des galets associés à un tuyau d'aspiration de ladite bande support B.

Les moyens 34 pour la séparation des pastilles P comprennent quant à eux un galet 341 qui, par pincement et par différence de vitesse, assure la séparation d'une pastille P par rapport aux pastilles P restantes en amont.

Les moyens de présentation 35 sont quant à eux constitués par le brin supérieur horizontal 351 d'une bande sans fin 352 associée à des tiroirs pneumatiques 353.

Cette bande 352 est avantageusement réalisée dans un matériau apte à coopérer avec la surface adhésive C21 des pastilles P, tout en autorisant une désolidarisation aisée de ces dernières lors de la préhension par le préhenseur 42 (sans altération de la surface adhésive).

Les tiroirs pneumatiques 353 sont avantageusement constitués par un ensemble de lames métalliques sur chants, activées chacune par vérin pneumatique. Chaque lame métallique se met en place automatiquement derrière chaque pastille P distribuée par la bande 352, de sorte à mettre au pas et à séparer chaque pastille P.

Ces moyens de présentation 35 sont adaptés de sorte assurer un écartement entre les pastilles P correspondant à l'écartement des ventouses 421 portées par le préhenseur 42.

Les moyens de présentation 35 portent ainsi plusieurs pastilles P alignées en série, avec leur couche isolante C1 sur le dessus, et au-dessus desquelles viennent se positionner les ventouses 421 du préhenseur à vide 42 en configuration de préhension.

Ces moyens de présentation 3 permettent ainsi la fourniture de pastilles P, dissociées les unes des autres, à disposition du préhenseur 42.

L'invention présente ainsi différents avantages :
- une projection des pastilles sur le panneau, sans réaliser d'appui mécanique, ce qui évite de briser le coussin d'air du dosseret de convoyage, et donc les salissures ;
- une limitation du nombre de pastilles déposées au strict nécessaire de sorte que seules les surfaces communes à deux panneaux successifs soient recouvertes de pastilles P, ce qui permet une consommation réduite des pastilles ;

- une répartition des pastilles P à la demande, tenant compte notamment des contraintes des étapes suivantes, s'il y a lieu, tel que la palettisation via robot poly-articulé et préhenseur à ventouses (les zones où les ventouses de ce préhenseur seront posées pourront être épargnées de pastilles P) ;
- la face A1 du panneau A qui reçoit les pastilles P est avantageusement celle qui est utilisée par le système de préhension à ventouses, lors des opérations de palettisation des panneaux vitrés pour leur stockage et leur transport, et lors des opérations de pose de ces panneaux vitrés sur les châssis de menuiseries destinés à les recevoir ; de la sorte la face A2 de ces panneaux, opposée à la face de prélèvement A1, est exempte de pastilles P susceptibles de gêner lesdites opérations de palettisation et de pose sur châssis de menuiseries.

La dépose des pastilles sur le panneau, sans appui mécanique réel, s'effectue de préférence avec la pastille en cours de dépose très proche du panneau, le soufflage dans la ventouse associée étant suffisant pour projeter cette pastille, et le choc de dépose étant négligeable et insuffisant pour briser le coussin d'air.

Ce flux d'air en soufflage par la ventouse permet un appui effectif de la pastille en un point précis du panneau, tout en supprimant toute force mécanique directe.

Le contrôle des ventouses, en toute indépendance, permet également de contrôler la dépose de chaque pastille sur le panneau.

## Revendications

1. Procédé pour la pose de pastilles (P) formant entretoise sur une surface de réception (A1) d'un panneau (A), en particulier d'un panneau de verre, en vue d'un empilement dudit panneau,
lequel procédé de pose comprend une étape de transfert au cours de laquelle chacune desdites pastilles (P) est transférée, par le biais de moyens de transfert (4), depuis des moyens (3) pour la distribution desdites pastilles (P) jusqu'à ladite surface de réception (A1) dudit panneau (A),
**caractérisé en ce que** lesdits moyens de transfert (4) comprennent au moins une ventouse (421) associée à des moyens (422) pour générer un flux d'air au sein de ladite ventouse (421),
et **en ce que** ladite étape de transfert comprend un pilotage desdits moyens de transfert (4) entre deux configurations :
a/ une configuration de préhension, dans laquelle :
a1/ ladite ventouse (421) libre, dépourvue de pastille (P), est agencée en regard d'une pastille (P) située au niveau desdits moyens de distribution (3), puis
a2/ un flux d'air en aspiration est généré dans ladite ventouse (421), pour assurer la préhension de ladite pastille (P), et
b/ une configuration de dépose, dans laquelle :
b1/ ladite ventouse (421) occupée, portant une pastille (P), est agencée en regard de la surface de réception (A1) du panneau (A), de sorte qu'une distance (D) non nulle est ménagée entre, d'une part, la surface de réception (A1) du panneau (A) et, d'autre part, la surface (C21) en regard de la pastille (P) portée par la ventouse (421), puis
b2/ un flux d'air en soufflage est généré dans ladite ventouse (421) occupée, pour exercer une poussée sur la pastille (P) associée en direction de ladite surface de réception (A1) du panneau (A).

2. Procédé selon la revendication 1, **caractérisé en ce que** la distance (D) ménagée entre, d'une part, la surface de réception (A1) du panneau (A) et, d'autre part, la surface (C21) en regard de la pastille (P) portée par la ventouse (421), est inférieure ou égale à 1mm.

3. Procédé selon l'une quelconque des revendications 1 ou 2, **caractérisé en ce que** les moyens de transfert (4) comprennent une pluralité de ventouses (421) qui sont associées à des moyens (422) pour générer des flux d'air distincts au sein desdites ventouses (421),
et **en ce que** :
- dans la configuration de préhension, une ou plusieurs ventouses (421) libres prélèvent l'une desdites pastilles (P), et
- dans la configuration de dépose, lesdites ventouses (421) occupées exercent successivement une poussée sur lesdites pastilles (P) respectivement associées en direction de ladite surface de réception (A1) du panneau (P).

4. Installation pour la pose de pastilles (P) formant entretoise sur une surface de réception (A1) d'un panneau (A), en particulier un panneau de verre, en vue d'un empilement dudit panneau (A),
laquelle installation de pose (1) comprend :
- des moyens (2) pour le support d'au moins l'un desdits panneaux (A), avec ladite surface de réception (A1) accessible,
- des moyens (3) pour la distribution desdites pastilles (P),
- des moyens (4) pour le transfert desdites pastilles (P) depuis lesdits moyens de distribution (3) jusqu'à ladite surface de réception (A1) du panneau (A), et
- des moyens pour la commande desdits moyens de transfert (4),
**caractérisée en ce que** lesdits moyens de transfert (4) comprennent au moins une ventouse (421) qui est, d'une part, associée à des moyens (422) pour générer un flux d'air au sein de ladite ventouse (421) et, d'autre part, portée par des moyens de manoeuvre dans l'espace (41),
lesquels moyens de commande comportent des moyens pour piloter lesdits moyens de transfert (4) entre deux configurations :
a/ une configuration de préhension, dans laquelle :
a1/ lesdits moyens de manoeuvre (41) pilotent ladite ventouse (421) libre, dépourvue de pastille (P), en regard d'une pastille (P) située au niveau desdits moyens de distribution (3), et
a2/ les moyens (422) pour générer un flux d'air sont pilotés pour générer un flux d'air en aspiration dans ladite ventouse (421), pour assurer la préhension de ladite pastille (P), et
b/ une configuration de dépose, dans laquelle :
b1/ les moyens de manoeuvre (41) pilotent ladite ventouse (421) occupée, portant une pastille (P) prélevée, en regard de la surface de réception (A1) du panneau (A), et
b2/ les moyens (422) pour générer un flux d'air sont pilotés pour générer un flux d'air en soufflage dans ladite ventouse (421) occupée, pour exercer une poussée sur ladite pastille (P) en direction de ladite surface de réception (A1) du panneau (A), lesquels moyens de commande comprennent un programme d'ordinateur comprenant des moyens de code de programme, enregistrés sur un support lisible par un ordinateur, pour l'exécution des étapes du procédé selon l'une quelconque des revendications 1 à 3, lorsque ledit programme d'ordinateur est exécuté par lesdits moyens de commande.

5. Installation selon la revendication 4, **caractérisée en ce que** la ventouse (421) consiste en une ventouse à soufflet.

6. Installation selon l'une quelconque des revendications 4 ou 5, **caractérisée en ce que** les moyens de transfert (4) comprennent plusieurs ventouses (421), et **en ce que** les moyens (422) pour générer les flux d'air comprennent des moyens pour générer des flux d'air indépendants au sein de chacune des ventouses (421).

7. Installation selon la revendication 6, **caractérisée en ce que** les ventouses (421) sont réparties sur au moins deux lignes, s'étendant parallèlement et à distance l'une de l'autre, et **en ce que** les moyens de distribution (3) comprennent des moyens pour la présentation des pastilles selon des lignes (3') complémentaires.

8. Installation selon l'une quelconque des revendications 4 à 7, dans laquelle les pastilles (P) sont initialement alignées sur une bande support (B), solidarisées longitudinalement les unes avec autres par une ligne d'amorce de rupture (L), **caractérisée en ce que** les moyens de distribution (3) comportent (i) des moyens (33) pour séparer lesdites pastilles (P) par rapport à ladite bande support (B) et (ii) des moyens (34) pour rompre lesdites lignes d'amorce de rupture (L).

9. Installation selon l'une quelconque des revendications 4 à 8, **caractérisée en ce que** les moyens de manoeuvre (41) consistent en un robot à bras poly-articulé.

10. Installation selon l'une quelconque des revendications 4 à 9, **caractérisée en ce que** les moyens support de panneaux (2) comprennent un dosseret (21) muni :
- de moyens (22) pour générer un coussin d'air, apte à porter une surface (A2) dudit panneau (A) rapporté, opposée à ladite surface de réception (A1), et
- des moyens (23) pour le convoyage desdits panneaux (A) le long dudit dosseret (21).

## Patentansprüche

1. Verfahren zum Anbringen von auf einer Aufnahmefläche (A1) einer Platte (A), insbesondere einer Glasplatte, Abstandsstücke bildenden Pastillen (P) zum Zwecke des Stapelns der Platte,
wobei das Verfahren zum Anbringen einen Verlagerungsschritt aufweist, während dessen jede der Pastillen (P) mittels Verlagerungsmitteln (4) von Mitteln (3) zum Verteilen der Pastillen (P) zur Aufnahmefläche (A1) der Platte (A) verlagert wird,
**dadurch gekennzeichnet, daß** die Verlagerungsmittel (4) wenigstens einen Saugnapf (421) aufweisen, der Mitteln (422) zum Erzeugen eines Luftstroms im Saugnapf (421) zugeordnet ist,
und daß der Verlagerungsschritt ein Steuern der Verlagerungsmittel (4) zwischen zwei Einstellungen aufweist:
a/ einer Erfassungseinstellung, bei der
a1/ der freie Saugnapf (421), der keine Pastille (P) enthält, gegenüber einer Pastille (P) angeordnet wird, die sich im Bereich der Mittel (3) zum Verteilen befindet, dann
a2/ im Saugnapf (421) ein Saugluftstrom erzeugt wird, um das Erfassen der Pastille (P) sicherzustellen, und
b/ einer Ablageeinstellung, bei der
b1/ der besetzte Saugnapf (421), der eine Pastille (P) enthält, gegenüber der Aufnahmefläche (A1) der Platte (A) derart angeordnet wird, daß ein von Null verschiedener Abstand (D) zwischen der Aufnahmefläche (A1) der Platte (A) einerseits und der gegenüberliegenden Oberfläche (C21) der vom Saugnapf (421) getragenen Pastille (P) andererseits eingerichtet wird, dann
b2/ im besetzten Saugnapf (421) ein Blasluftstrom erzeugt wird, um auf die zugehörige Pastille (P) eine Stoßkraft in Richtung auf die Aufnahmefläche (A1) der Platte (A) auszuüben.

2. Verfahren gemäß Anspruch 1, **dadurch gekennzeichnet, daß** der zwischen der Aufnahmefläche (A1) der Platte (A) einerseits und der gegenüberliegenden Oberfläche (C21) der vom Saugnapf (421) getragenen Pastille (P) andererseits eingerichtete Abstand (D) kleiner als oder gleich 1 mm ist.

3. Verfahren gemäß einem der Ansprüche 1 oder 2, **dadurch gekennzeichnet, daß** die Verlagerungsmittel (4) eine Anzahl Saugnäpfe (421) aufweisen, die Mitteln (422) zum Erzeugen individueller Luftströme in den Saugnäpfen zugeordnet sind,
und daß
- ein freier oder mehrere freie Saugnäpfe (421) in der Erfassungseinstellung eine der Pastillen (P) entnehmen und
- die besetzten Saugnäpfe (421) in der Ablageeinstellung nacheinander auf die jeweils zugeordneten Pastillen (P) in Richtung auf die Aufnahmefläche (A1) der Platte (A) eine Stoßkraft ausüben.

4. Anlage zum Anbringen von auf einer Aufnahmefläche (A1) einer Platte (A), insbesondere einer Glasplatte, Abstandsstücke bildenden Pastillen (P) zum Zwecke des Stapelns der Platte,
wobei die Anlage zum Anbringen
- Mittel (2) zum Tragen wenigstens einer der Platten (A), wobei die Aufnahmefläche (A1) zugänglich ist,
- Mittel (3) zum Verteilen der Pastillen (P),
- Mittel (4) zum Verlagern der Pastille (P) von den Mitteln (3) zum Verteilen zur Aufnahmefläche (A1) der Platte (A) und
- Mittel zum Steuern der Verlagerungsmittel (4) aufweist,
**dadurch gekennzeichnet, daß** die Verlagerungsmittel (4) wenigstens einen Saugnapf (421) aufweisen, der einerseits Mitteln (422) zum Erzeugen eines Luftstroms im Saugnapf zugeordnet ist und andererseits von Mitteln (41) zum Manövrieren im Raum getragen wird,
wobei die Steuerungsmittel Mittel zum Steuern der Verlagerungsmittel (4) zwischen zwei Einstellungen aufweisen:
a/ einer Erfassungseinstellung, bei der
a1/ die Mittel (41) zum Manövrieren den freien Saugnapf (421), der keine Pastille (P) enthält, vor eine Pastille (P) steuern, die sich im Bereich der Mittel (3) zum Verteilen befindet, und
a2/ die Mittel (422) zum Erzeugen eines Luftstroms so gesteuert werden, daß im Saugnapf (421) ein Saugluftstrom erzeugt wird, um das Erfassen der Pastille (P) sicherzustellen, und
b/ einer Ablageeinstellung, bei der
b1/ die Mittel (41) zum Manövrieren den besetzten Saugnapf (421), der eine entnommene Pastille (P) enthält, vor die Aufnahmefläche (A1) der Platte (A) steuern, und
b2/ die Mittel (422) zum Erzeugen eines Luftstroms so gesteuert werden, daß im besetzten Saugnapf (421) ein Blasluftstrom erzeugt wird, um auf die zugehörige Pastille (P) eine Stoßkraft in Richtung auf die Aufnahmefläche (A1) der Platte (A) auszuüben,
wobei die Steuerungsmittel ein Computerprogramm mit Programmcodemitteln, die auf einem mittels eines Computers lesbaren Träger gespeichert sind, aufweisen, um die Schritte des Verfahrens gemäß einem der Ansprüche 1 bis 3 auszuführen, wenn das Computerprogramm durch die Steuerungsmittel durchgeführt wird.

5. Anlage gemäß Anspruch 4, **dadurch gekennzeichnet, daß** der Saugnapf (421) aus einem Saugnapf mit Balg besteht.

6. Anlage gemäß einem der Ansprüche 4 oder 5, **dadurch gekennzeichnet, daß** die Verlagerungsmittel (4) mehrere Saugnäpfe (421) aufweisen und daß die Mittel (422) zum Erzeugen der Luftströme Mittel zum Erzeugen unabhängiger Luftströme in jedem der Saugnäpfe (421) aufweisen.

7. Anlage gemäß Anspruch 6, **dadurch gekennzeichnet, daß** die Saugnäpfe (421) auf wenigstens zwei Linien verteilt sind, die zueinander parallel und in einem Abstand voneinander verlaufen, und daß die Mittel (3) zum Verteilen Mittel zum Bereithalten der Pastillen entlang komplementärer Linien (3') aufweisen.

8. Anlage gemäß einem der Ansprüche 4 bis 7, bei der die Pastillen (P) anfangs auf einem Trägerband (B) aufgereiht sind, wobei sie in Längsrichtung jeweils durch eine Sollbruchlinie (L) miteinander verbunden sind, **dadurch gekennzeichnet, daß** die Mittel (3) zum Verteilen (i) Mittel (33) zum Abtrennen der Pastillen (P) vom Trägerband (B) und (ii) Mittel (34) zum Auftrennen der Sollbruchlinien (L) aufweisen.

9. Anlage gemäß einem der Ansprüche 4 bis 8, **dadurch gekennzeichnet, daß** die Mittel (41) zum Manövrieren aus einem Roboter mit mehrgelenkigem Arm bestehen.

10. Anlage gemäß einem der Ansprüche 4 bis 9, **dadurch gekennzeichnet, daß** die Mittel (2) zum Tragen von Platten eine rückwärtige Stütze (21) aufweisen, die mit
- Mitteln (22) zum Erzeugen eines Luftkissens, das geeignet ist, eine von der Aufnahmefläche (A1) abgewandte Oberfläche (A2) der angetragenen Platte (A) zu tragen, und
- Mitteln (23) zum Transportieren der Platten (A) entlang der rückwärtigen Stütze (21)
versehen ist.

## Claims

1. A method for laying pads (P) forming spacers on a receiving surface (A1) of a panel (A), in particular a glass panel, with a view to stacking said panel,
wherein said laying method comprises a transfer step during which each of said pads (P) is transferred, through transfer means (4), from means (3) for distributing said pads (P) to said receiving surface (A1) of said panel (A),
**characterized in that** said transfer means (4) comprise at least one suction cup (421) associated with means (422) for generating an air flow within said suction cup (421),
and **in that** said transfer step comprises piloting said transfer means (4) between two configurations:
a/ a gripping configuration, in which:
a1/ said suction cup (421), which is free, i.e. with no pad (P), is placed opposite a pad (P) located at said distribution means (3), then
a2/ a suction air flow is generated within said suction cup (421), to allow the gripping of said pad (P), and
b/ a laying configuration, in which:
b1/ said suction cup (421), which is occupied , i.e. carrying a pad (P), is placed opposite the receiving surface (A1) of the panel (A), so that a non-zero distance (D) is provided between, on the one hand, the receiving surface (A1) of the panel (A) and, on the other hand, the opposite surface (C21) of the pad (P) carried by the suction cup (421), then
b2/ a blowing air flow is generated within said occupied suction cup (421), to exert a thrust onto the associated pad (P) towards said receiving surface (A1) of the panel (A).

2. The method according to claim 1, **characterized in that** the distance (D) provided between, on the one hand, the receiving surface (A1) of the panel (A) and, on the other hand, the opposite surface (C21) of the pad (P) carried by the suction cup (421), is lower than or equal to 1 mm.

3. The method according to any one of claims 1 or 2, **characterized in that** the transfer means (4) comprise a plurality of suction cups (421) that are associated with means (422) for generating distinct air flows within said suction cups (421),
and **in that**:
- in the gripping configuration, one or several free suction cups (421) take one of said pads (P), and
- in the laying configuration, said occupied suction cups (421) exert successively a thrust onto said respectively associated pads (P) towards said receiving surface (A1) of the panel (A).

4. An installation for laying pads (P) forming spacers on a receiving surface (A1) of a panel (A), in particular a glass panel, with a view to stacking said panel (A),
wherein said laying installation (1) comprises:
- means (2) for supporting at least one of said panels (A), with said receiving surface (A1) accessible,
- means (3) for distributing said pads (P),
- means (4) for transferring said pads (P) from said distribution means (3) to said receiving surface (A1) of the panel (A), and
- means for controlling said transfer means (4),
**characterized in that** said transfer means (4) comprise at least one suction cup (421) that is, on the one hand, associated with means (422) for generating an air flow within said suction cup (421), and on the other hand, carried by three-dimensional operating means (41),
wherein said control means include means for piloting said transfer means (4) between two configurations:
a/ a gripping configuration, in which:
a1/ said operating means (41) pilot said suction cup (421), which is free, i.e. with no pad (P), opposite a pad (P) located at said distribution means (3), and
a2/ the means (422) for generating an air flow are piloted to generate a suction air flow within said suction cup (421), to allow the gripping of said pad (P), and
b/ a laying configuration, in which:
b1/ the operating means (41) pilot said suction cup (421), which is occupied, i.e. carrying a pad (P), opposite the receiving surface (A1) of the panel (A), and
b2/ the means (422) for generating an air flow are piloted to generate a blowing air flow within said occupied suction cup (421), to exert a thrust onto said associated pad (P) towards said receiving surface (A1) of the panel (A),
wherein said control means comprise a computer program comprising program code means, recorded on a computer-readable support, for implementing the steps of the method according to any one of claims 1 to 3, when said computer program is executed by said control means.

5. The installation according to claim 4, **characterized in that** the suction cup (421) consists in a bellows suction cup.

6. The installation according to any one of claims 4 or 5, **characterized in that** the transfer means (4) comprise several suction cups (421), and **in that** the means (422) for generating the air flows comprise means for generating independent air flows within each of the suction cups (421).

7. The installation according to claim 6, **characterized in that** the suction cups (421) are arranged along at least two lines, extending parallel to each other and remote from each other, and **in that** the distribution means (3) comprise means for positioning the pads according to complementary lines (3').

8. The installation according to any one of claims 4 to 7, wherein the pads (P) are initially aligned on a support strip (B), longitudinally attached to each other by a fracture initiation line (L), **characterized in that** the distribution means (3) include (i) means (33) for separating said pads (P) from said support strip (B) and (ii) means (34) for breaking said fracture initiation line (L).

9. The installation according to any one of claims 4 to 8, **characterized in that** the operating means (41) are a poly-articulated arm robot.

10. The installation according to any one of claims 4 to 9, **characterized in that** the panel support means (2) comprise a backrest (21) provided with :
- means (22) for generating an air cushion, adapted to carry a surface (A2) of said added panel (A), opposite to said receiving surface (A1), and
- means (23) for conveying said panels (A) along said backrest (21).
